# FASCICULE DE BREVET EUROPEEN

(11) **EP 3 586 604 B1**
(45) Date de publication et mention de la délivrance du brevet: **03.08.2022**
(21) Numéro de dépôt: 19180546.4
(22) Date de dépôt: 17.06.2019
(51) Int. Cl.: A01K 5/00, A01F 25/20

(54) **VÉHICULE AGRICOLE POUR COLLECTER ET, ÉVENTUELLEMENT TRAITER, DES PRODUITS FIBREUX ET/OU GRANULAIRES OU TOUT AUTRE FOURRAGE EN VUE DE LEUR DISTRIBUTION**
LANDWIRTSCHAFTLICHES FAHRZEUG ZUM SAMMELN UND EVENTUELLEN AUFBEREITEN VON FASERIGEN UND/ODER KÖRNIGEN PRODUKTEN ODER EINER ANDEREN ART VON FUTTER FÜR IHRE VERTEILUNG
AGRICULTURAL VEHICLE FOR COLLECTING AND, OPTIONALLY TREATING, FIBROUS AND/OR GRAIN PRODUCTS OR ANY ANOTHER FODDER FOR THEIR DISTRIBUTION

(30) Priorité: 22.06.2018 FR 1855574
(43) Date de publication de la demande: 01.01.2020
(73) Titulaire: Kuhn-Audureau SAS, 85260 La Copechagnière (FR)
(72) Inventeur: BONNET, Philippe, 44200 Nantes (FR); RULLEAU, Samuel, 85140 Boulogne (FR)
(74) Mandataire: Cabinet Nuss

(56) Documents cités:
- EP-A1- 0 897 856
- EP-A2- 2 842 411
- DE-U1- 9 005 280
- DE-U1- 29 611 851
- DE-U1-202014 003 600
- US-A1- 2017 364 089

## Description

La présente invention concerne le domaine du machinisme agricole, plus particulièrement les engins mobiles de distribution de produits en vrac pour l'alimentation des animaux, et a pour objet un véhicule agricole pour collecter et, éventuellement traiter, des produits fibreux et/ou granulaires ou tout autre fourrage en vue de leur distribution.

Ces véhicules agricoles, par exemple du type mélangeuse, sont notamment mis en œuvre dans le domaine agricole pour collecter et traiter des produits d'alimentation animale stockés en étant conditionnés en bottes ou posés en tas au sol, et ensuite pour les distribuer.

On connait déjà de tels véhicules agricoles qui s'étendent le long d'un axe longitudinal et comprennent généralement un châssis roulant, une cuve de réception et de mélange reposant sur ledit châssis et contenant au moins une vis mélangeuse, un bras de chargement muni à son extrémité libre d'une tête de prélèvement comportant un organe de prélèvement formant la partie active de ladite tête et équipé d'un dispositif de transfert assurant le transport du produit prélevé par ledit organe de prélèvement jusque dans la cuve qui comporte à cet effet une ouverture de réception du produit. L'ouverture de réception présente généralement une forme globalement allongée dans la direction de l'axe longitudinal et se terminant par deux extrémités globalement arrondies ou en arc de cercle. Le dispositif de transfert comprend une extrémité libre munie d'une sortie ou d'une plateforme de jonction permettant d'assurer la jonction ou quasi jonction avec l'ouverture de réception de la cuve pour pouvoir déverser le produit directement dans cette dernière.

L'organe de prélèvement consiste généralement en un organe rotatif tel qu'une fraise rotative qui s'étend horizontalement et perpendiculairement à l'axe longitudinal du véhicule agricole et au bras de chargement.

La fraise rotative est généralement constituée d'un rotor horizontal muni de griffes ou de lames permettant d'attaquer le produit stocké en le prélevant et en l'expulsant dans le dispositif de transfert.

Le dispositif de transfert consiste généralement en un convoyeur à tapis ou à bande recevant le produit prélevé et expulsé par la fraise rotative et le transportant par son déplacement le long du bras jusque dans la cuve.

Le bras de chargement est généralement monté pivotant sur le châssis ou la cuve autour d'un axe horizontal perpendiculaire à l'axe longitudinal du véhicule agricole de sorte à permettre le déplacement du bras de chargement dans un plan vertical depuis une position basse jusqu'à une position haute et réciproquement. Le pivotement du bras de chargement permet de positionner la fraise rotative à des hauteurs différentes afin de pouvoir attaquer le produit stocké sur toute sa hauteur de stockage et sur une largeur définie par l'étendue longitudinale de la fraise rotative.

Ce type de véhicule agricole est connu pour fonctionner de manière autonome, c'est-à-dire de manière robotisé ou automatique sans nécessiter de poste de conduite, ou avec une cabine, ou un poste, de pilotage, généralement disposé(e) à côté du bras de chargement, lui-même généralement situé à l'avant du véhicule agricole. Ce type de véhicule agricole est connu sous la désignation mélangeuse ou désileuse mélangeuse, et est, par exemple, commercialisé par la demanderesse, sous différentes variantes et tailles, en tant que, pour un fonctionnement avec poste de pilotage, mélangeuses automotrices de la gamme SPW.

Le document EP2842411 a pour objet un tel véhicule de transport d'ensilage fonctionnant de manière autonome. Ce véhicule de transport, s'étendant le long d'un axe longitudinal, comprend un corps de véhicule qui comporte une cuve pour recevoir et contenir l'ensilage à transporter et un collecteur d'ensilage. Le collecteur d'ensilage comprend une flèche comportant une extrémité proximale montée de manière pivotante, autour d'un axe de pivotement horizontal et perpendiculaire au plan médian du véhicule contenant son axe longitudinal, grâce à un vérin hydraulique, sur le corps du véhicule et une extrémité distale ou libre munie d'une tête de coupe d'ensilage pour couper l'ensilage d'une meule de produit. La flèche est en outre équipée d'un transporteur d'ensilage s'étendant le long de cette dernière pour transporter l'ensilage coupée par la tête de coupe jusque dans la cuve.

Toutefois, dans les véhicules agricoles connus de ce type, fonctionnant de manière autonome ou avec une cabine, ou poste, de pilotage, les organes de prélèvement utilisés possèdent une largeur hors tout sensiblement égale à la largeur hors tout du corps de véhicule de sorte que ces organes de prélèvement nécessitent, proportionnellement à leur largeur hors tout, une puissance importante. Or, une puissance trop élevée est problématique dans un contexte énergétique d'optimisation des consommations de carburant, voire de consommation électrique. En outre, la largeur hors tout élevée de ces organes augmente notablement le poids et le coût des véhicules et réduit la zone d'échappement pour une personne circulant à proximité du bras de chargement et, le cas échéant, qui ne serait pas détectée dans l'environnement proche du véhicule par un détecteur équipant celui-ci.

La largeur hors tout d'un élément du véhicule agricole, par exemple le corps de véhicule ou l'organe de prélèvement, doit être comprise dans la présente demande comme correspondant à l'étendue maximale, mesurée en unité de longueur, dans une direction perpendiculaire au plan médian du véhicule agricole contenant son axe longitudinal.

Le document DE9005280U1 a pour objet un ensemble agricole composé d'une machine du type chariot d'attelage destiné à être tracté ou attelé à un tracteur. Le chariot comprend une unité de prélèvement et de projection montée sur un châssis pivotant verticalement et comprenant un tambour de broyage et un canal de projection associé à ce dernier. Le tambour peut être déplacé en translation horizontalement de gauche à droite dans le châssis et est monté sur un arbre s'étendant sur toute la largeur du véhicule.

Le document DE29611851U1 concerne un véhicule tracté par un tracteur agricole. Ce véhicule comprend une bande transporteuse munie de dents de broyage permettant de prélever le produit et de le projeter dans la cuve du véhicule. La bande transporteuse peut être montée de sorte à être déplaçable transversalement pour effectuer une certaine largeur de travail ou, si ce n'est pas le cas, être plus large pour effectuer la même largeur de travail.

Toutefois, les véhicules divulgués par ces deux documents DE9005280U1 et DE29611851U1 ne permettent pas d'obtenir une réduction suffisante de la consommation énergétique et du poids/coût du véhicule.

La présente invention a pour but de pallier ces inconvénients en proposant un véhicule agricole pour collecter, et éventuellement traiter, des produits fibreux et/ou granulaires ou tout autre fourrage en vue de leur distribution, permettant de minimiser la puissance d'entraînement de l'organe de prélèvement et de réduire la consommation énergétique et le poids/coût du véhicule, tout en augmentant la zone d'échappement.

A cet effet, la présente invention a pour objet un véhicule agricole pour collecter et, éventuellement traiter, des produits fibreux et/ou granulaires ou tout autre fourrage en vue de leur distribution, ledit véhicule agricole s'étendant le long d'un axe longitudinal et comprenant, d'une part, un corps de véhicule comportant une cuve de réception et de mélange et un châssis supportant la cuve, d'autre part, une unité de prélèvement et de transport comprenant une tête de prélèvement munie d'un organe de prélèvement du produit, de préférence un organe de prélèvement rotatif consistant en une fraise rotative, et un bras de chargement équipé d'un dispositif de transfert apte à transporter ledit produit prélevé jusque dans la cuve et, d'autre part, des moyens d'entraînement et de guidage en pivotement, le bras de chargement étant monté sur le corps de véhicule en étant, grâce auxdits moyens d'entraînement et de guidage en pivotement, mobile en pivotement dans un plan vertical autour d'un axe de pivotement horizontal et perpendiculaire au plan médian principal de sorte à permettre un déplacement vertical de l'organe de prélèvement lors du pivotement du bras de chargement et se caractérise essentiellement :
- en ce que la largeur hors tout de l'organe de prélèvement est inférieure ou égale à la moitié de largeur hors tout du corps de véhicule, ladite largeur hors tout étant définie comme l'étendue maximale du corps de véhicule, respectivement de l'organe de prélèvement, mesurée en unité de longueur, dans une direction perpendiculaire au plan médian, dit plan médian principal, du véhicule agricole contenant son axe longitudinal,
- en ce qu'il comprend des moyens d'entraînement et de guidage en translation et en ce que le bras de chargement est monté sur le corps de véhicule en étant, grâce auxdits moyens d'entraînement et de guidage en translation, mobile en translation dans une direction transversale, perpendiculaire au plan médian principal, de sorte à permettre un déplacement transversal de la tête de prélèvement et son organe de prélèvement, c'est-à-dire dans ladite direction transversale, entre une première position de translation d'extrémité définie par un premier plan médian, parallèle au plan médian principal, de la tête de prélèvement ou du bras de chargement et une deuxième position de translation d'extrémité définie par un deuxième plan médian, parallèle au plan médian principal, de la tête de prélèvement ou du bras de chargement.

L'invention sera mieux comprise, grâce à la description ci-après, qui se rapporte à au moins un mode de réalisation préféré, donné à titre d'exemple non limitatif, et expliqué avec référence aux dessins schématiques annexés, dans lesquels :

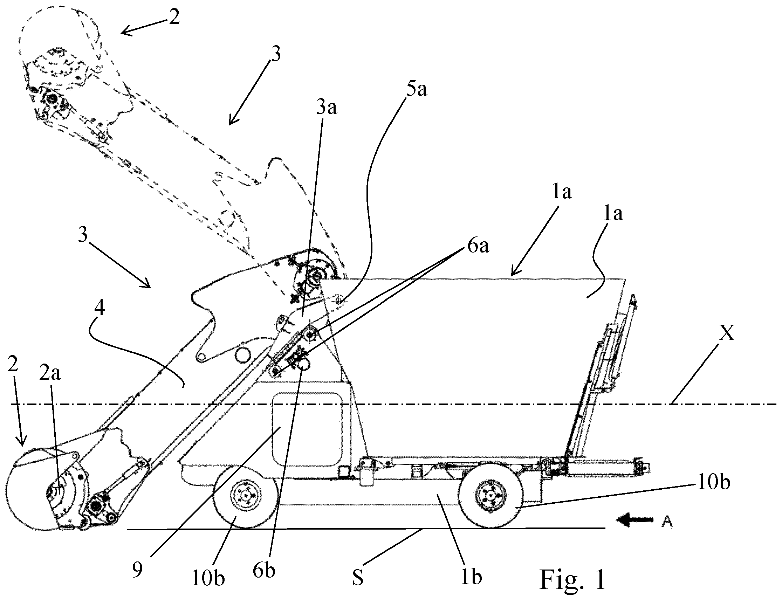

- la figure 1 est une vue de profil d'un véhicule agricole selon la présente invention, dans un mode de fonctionnement autonome et dans une forme de réalisation du déplacement du bras de chargement où celui-ci est monté sur le châssis de manière pivotante verticalement et en translation horizontal perpendiculairement à l'axe longitudinal du véhicule agricole, et montre le bras de chargement dudit véhicule agricole en position de pivotement basse et, en traits interrompus, en position de pivotement haute,

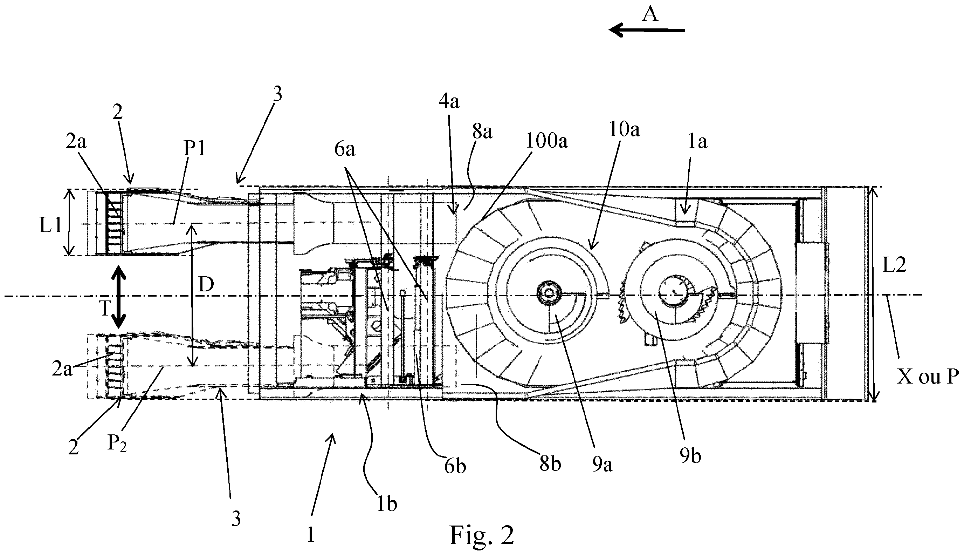

- la figure 2 est une vue de dessus du véhicule agricole autonome représenté sur la figure 1 et montrant le bras de chargement, représenté schématiquement dans sa partie située du côté du corps de véhicule 1 et opposée à l'organe de prélèvement, dans la première position de translation d'extrémité et, en traits interrompus, dans la deuxième position de translation d'extrémité,

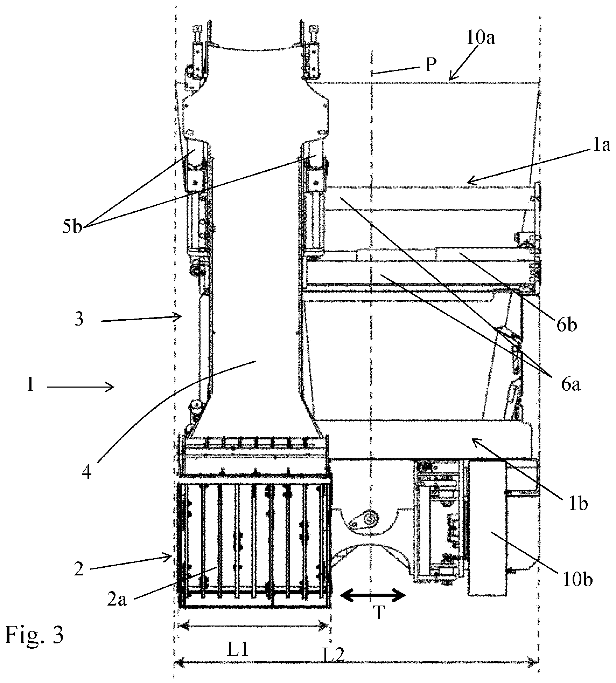

- la figure 3 est une vue de face de la partie avant du véhicule agricole représenté sur la figure 1, le bras de chargement étant monté sur ladite partie avant du véhicule agricole, avec une largeur hors tout de l'organe de prélèvement supérieure à celle de l'organe de prélèvement représenté sur la figure 2.

Les figures montrent un véhicule agricole pour collecter et, éventuellement traiter, des produits fibreux et/ou granulaires ou tout autre fourrage en vue de leur distribution, ledit véhicule agricole s'étendant le long d'un axe longitudinal X et comprenant, d'une part, un corps de véhicule 1 comportant une cuve la de réception et de mélange et un châssis 1b supportant la cuve la et, d'autre part, de préférence à l'avant du véhicule agricole, une unité de prélèvement et de transport 2, 3, 4 comprenant une tête de prélèvement 2, 3 et 4 comportant un organe de prélèvement 2a, de préférence un organe de prélèvement rotatif tel qu'une fraise rotative, apte à prélever un produit à l'état stocké, et un bras de chargement 3 équipé d'un dispositif de transfert 4 apte à transporter ledit produit prélevé jusque dans la cuve la.

Conformément à la présente invention, dans un tel véhicule agricole la largeur hors tout L1 de l'organe de prélèvement 2a est inférieure ou égale à la moitié de largeur hors tout L2 du corps de véhicule 1. Ainsi, grâce à un tel organe de prélèvement 2a selon la présente invention, il est possible, par rapport aux véhicules agricoles actuels dans ce domaine, de minimiser la puissance d'entraînement de l'organe de prélèvement 2a et de réduire notablement la consommation énergétique et le poids/coûts du véhicule agricole, tout en augmentant la zone d'échappement pour une personne circulant à proximité du bras de chargement 3 et, le cas échéant, qui ne serait pas détectée dans l'environnement proche du véhicule. Selon la présente invention, ladite largeur hors tout L1, respectivement L2, de l'organe de prélèvement 2a, respectivement du corps de véhicule 1, ou de tout autre élément du véhicule agricole, correspond à l'étendue maximale du corps de véhicule 1, respectivement de l'organe de prélèvement 2a, ou dudit élément concerné, mesurée en unité de longueur, de préférence dans une unité de longueur du système international tel que le mètre, dans une direction perpendiculaire au plan médian, dit plan médian principal P, du véhicule agricole, ledit plan médian contenant l'axe longitudinal X dudit véhicule agricole.

De préférence, la largeur hors tout L1 du corps de véhicule peut être déterminée sans prendre en considération des parties moins essentielles que la cuve la ou le châssis 1b, telles que par exemple des capteurs, qui pourraient dépasser latéralement de la cuve la ou du châssis 1b.

De préférence, le châssis 1b peut être un châssis 1b roulant, c'est-à-dire équipé de roues 10b permettant son déplacement sur une surface S, comme on peut le voir sur la figure 1.

Par la suite, les orientations sont définies en considérant un tel véhicule reposant ou circulant sur une surface S horizontale. D'autre part, les termes perpendiculaire, respectivement parallèle, employés par la suite doivent être compris comme perpendiculaire ou sensiblement perpendiculaire, respectivement parallèle ou sensiblement parallèle.

Un tel véhicule agricole est un véhicule agricole autonome (figures 1, 2 et 3), c'est-à-dire robotisé ou automatisé, par exemple du type de celui divulgué dans le document EP 2842411. Un tel véhicule agricole autonome, comme on peut le voir sur la figure 1, peut comprendre une unité centrale qui peut être logée dans un boitier 9 fixé sur le châssis 1b, de préférence à proximité de l'unité de prélèvement et de transport 2, 3, 4. D'une manière alternative, le boîtier 9 peut être positionné à l'arrière du véhicule agricole. L'unité centrale peut comprendre l'ensemble des circuits électroniques, par exemple un microprocesseur et des mémoires, et le ou les programmes informatiques enregistrés dans la ou les mémoires, permettant le fonctionnement automatique du véhicule agricole, c'est-à-dire la commande automatique de son déplacement/avancement, par exemple dans le sens A, et/ou la commande automatique de l'unité de prélèvement et de transport 2, 3 et 4, c'est-à-dire, notamment, la commande automatique du fonctionnement du bras de chargement 3 et/ou de l'organe de prélèvement 2a selon des séquences de déplacement et/ou de vitesse de rotation de l'organe de prélèvement prédéterminées.

Le véhicule agricole comprend des moyens d'entraînement et de guidage en pivotement 5a, 5b et le bras de chargement 3 peut être monté sur le corps de véhicule 1, plus particulièrement sur le châssis 1a, en étant, grâce auxdits moyens d'entraînement et de guidage en pivotement 5a, 5b mobile en pivotement dans un plan vertical de sorte à permettre un déplacement vertical de l'organe de prélèvement 2a lors du pivotement du bras de chargement 3 autour d'un axe de pivotement 5a horizontal et perpendiculaire au plan médian principal P. On peut voir sur les figures 1, 2, 3 que les moyens d'entraînement et de pivotement 5a, 5b peuvent comprendre ledit axe de pivotement 5a et au moins un actionneur 5b tel que par exemple un vérin hydraulique. L'actionneur 5b peut être articulé sur le corps de véhicule 1, plus particulièrement sur le châssis 1b, et sur le bras de chargement 3. Le bras de chargement 3 peut ainsi être monté sur le corps de véhicule 1, plus particulièrement sur le châssis 1b, en étant mobile en pivotement autour de l'axe de pivotement 5a et apte à être entraîné en pivotement autour dudit axe de pivotement 5a sous l'effet de l'actionneur 5b, par exemple entre une position de pivotement basse et, représentée en traits interrompus sur la figure 1, une position de pivotement haute (figure 1).

Le véhicule agricole comprend en outre des moyens d'entraînement et de guidage en translation 6a, 6b et le bras de chargement 3 est monté sur le corps de véhicule 1 en étant mobile en translation dans une direction transversale T, perpendiculaire au plan médian principal P, de sorte à permettre un déplacement transversal de la tête de prélèvement 2 et son organe de prélèvement 2a, c'est-à-dire dans ladite direction transversale T, entre une première position de translation d'extrémité définie par un premier plan médian P1, parallèle au plan médian principal P, de la tête de prélèvement 2 ou du bras de chargement 3 et une deuxième position de translation d'extrémité définie par un deuxième plan médian P2, parallèle au plan médian principal P, de la tête de prélèvement 2 ou du bras de chargement 3. Un tel déplacement transversal du bras de chargement 3 et plus particulièrement de l'organe de la tête de prélèvement 2 et son organe de prélèvement 2a permet de réaliser un prélèvement du produit sur tout ou une grande partie de la largeur hors tout L2 du corps de véhicule 1 sans nécessiter de manœuvrer le véhicule agricole pour déplacer transversalement l'organe de prélèvement 2a et tout en obtenant au moins les avantages précités procurés par la présente invention.

Les moyens d'entraînement et de guidage en translation 6a, 6b peuvent comprendre au moins un axe de translation 6a horizontal et perpendiculaire au plan médian principal P, permettant de guider la translation du bras de chargement 3 monté sur ledit au moins un axe de translation 6a et au moins un actionneur 6b, tel que par exemple un vérin hydraulique. L'actionneur 6b peut être fixé sur le châssis 1b et le bras de chargement 3 parallèlement à l'axe de translation 6a.

Ainsi, avec un organe de prélèvement 2a de largeur réduite selon la présente invention, c'est-à-dire avec une largeur inférieure ou égale à la moitié de la largeur hors-tout L2 du corps de véhicule 1, le prélèvement de produit est plus précis puisqu'il y a une meilleure maîtrise de la quantité de produit chargé. En outre, pour balayer ou couvrir la totalité de la largeur hors-tout L2 du corps de véhicule 1, le bras de chargement 3 peut être déplacé deux fois, voire trois fois, latéralement dans la direction de translation T. En pratique, il est bien entendu qu'il peut être prévu un certain recoupement entre une première et une deuxième position de translation côte à côte.

Comme on peut le voir notamment sur la figure 2, la largeur hors tout L1 de l'organe de prélèvement 2a peut être inférieure ou égale à la moitié de la distance D entre le premier plan médian P1 et le deuxième plan médian P2. Une telle valeur ou réduction de la largeur hors tout L1 de l'organe de prélèvement 2a permet de travailler avec plus de précision au niveau de la maitrise de la quantité à charger et permet de travailler avec moins de puissance consommée. Un tel intervalle ou ratio autour de la moitié de la distance D signifie que, sans déplacement du véhicule 2, quatre ou cinq étapes de translation de l'organe de prélèvement 2a suffisent pour couvrir sensiblement la largeur du véhicule agricole, ce qui permet de limiter le nombre de séquences de chargement tout en permettant d'optimiser la précision du chargement et de réduire la puissance consommée du fait d'un organe de prélèvement 2a de largeur réduite ou étroite. Cette forme de réalisation allie précision et efficacité.

Comme on peut le voir également sur la figure 2, la largeur hors tout L1 de l'organe de prélèvement 2a peut être inférieure ou égale à la moitié de la distance D entre le premier plan médian P1 et le deuxième plan médian P2 et être supérieure ou égale au tiers, plus préférentiellement aux trois-quarts, de la distance D entre le premier plan médian P1 et le deuxième plan médian P2. Un tel intervalle ou ratio signifie que, sans déplacement du véhicule, trois à quatre ou cinq étapes de translation suffisent pour couvrir sensiblement la largeur du véhicule agricole, ce qui permet de limiter le nombre de séquences de chargement tout en permettant d'optimiser la précision du chargement et de réduire la puissance consommée. Cette forme de réalisation allie encore plus de précision et d'efficacité.

De préférence, la distance D entre le premier plan médian P1 et le deuxième plan médian P2 peut être inférieure ou égale à la largeur hors tout L2 du corps de véhicule 1.

La translation du bras de chargement 3 requiert moins de temps qu'un repositionnement du véhicule agricole dans un silo, la translation permet de préserver l'efficacité du chargement.

Bien entendu, comme on peut le voir sur la figure 3, la présente invention peut prévoir d'autres valeurs que ces valeurs préférentielles réduites de la largeur hors tout L1 de l'organe de prélèvement 2a. Par exemple, la largeur hors tout L1 de l'organe de prélèvement 2a peut être supérieure à la moitié de la distance D entre le premier plan médian P1 et le deuxième plan médian P2 de la tête de prélèvement 2 ou du bras de chargement 3 tout en étant, selon la présente invention, inférieure ou égale à la moitié de largeur hors tout L2 du corps de véhicule 1. Dans une alternative, la largeur hors tout L1 peut être comprise entre le quart de la distance D et les trois-quarts de la distance D.

La présente invention peut prévoir que le bras de chargement 3 puisse être mobile en pivotement dans un plan vertical et en translation horizontal transversalement au plan médian principal P (figures 1, 2, 3).

Le mode de fonctionnement autonome du véhicule agricole permet de libérer l'espace habituellement occupé, dans les véhicules ou machines agricoles actuelles, par la cabine de pilotage 7, généralement située à côté du bras de chargement 3, et de permettre le déplacement transversal du bras de chargement 3 dans cet espace ainsi libéré.

Comme on peut le voir sur les figures 1, 2, 3, et notamment sur la figure 1, le bras de chargement 3, d'une part, peut comprendre un support mobile 3a monté en translation sur le corps de véhicule 1, de préférence sur le châssis 1b, pour permettre son déplacement en translation et, d'autre part, peut-être monté en pivotement sur ou dans le support mobile 3a pour permettre son pivotement, ceci en n'importe quel point de son déplacement en translation.

Si on se réfère notamment à la figure 2, on peut voir que le dispositif de transfert 4 peut comprendre une sortie aménagée du produit, plus particulièrement une plateforme de jonction 4a, permettant de canaliser la sortie du produit transporté par le dispositif de transfert 4 jusque dans la cuve la qui comprend à cet effet une ouverture de réception 10a pour recevoir ledit produit. En outre, la cuve la peut comprendre deux zones de jonction 8a, 8b réalisant une jonction ou une quasi jonction entre l'ouverture de réception 10a, c'est-à-dire le bord 100a de ladite ouverture de réception 10a, et ladite plateforme de jonction 4a pour permettre la réception du produit dans la cuve la à travers ladite ouverture de réception 10a quelle que soit la position de translation d'extrémité P1, P2 du bras de chargement 3, à savoir une première zone de jonction 8a assurant une première jonction ou quasi jonction entre l'ouverture de réception 10a et la plateforme de jonction 4a lorsque celle-ci se trouve en un point de translation correspondant à la première position de translation d'extrémité P1 du bras de chargement 3 et une deuxième zone de jonction 8b assurant une deuxième jonction ou quasi jonction entre l'ouverture de réception 10a et la plateforme de jonction 4a lorsque celle-ci se trouve en un point de translation correspondant à la deuxième position de translation d'extrémité P2 du bras de chargement 3.

Le dispositif de transfert 4 peut s'étendre le long du bras de chargement 3. En outre, le dispositif de transfert 4 peut comprendre un organe de transport, tel que par exemple un convoyeur à bande, non visible sur les figures annexées et la largeur hors tout dudit organe de transport, dans le cas du convoyeur à tapis ou bande, peut être inférieure à celle de l'organe de prélèvement 2a de sorte à permettre un chargement du produit dans/sur l'organe de transport plus efficace.

Le véhicule agricole peut comprendre des moyens de détection, non représentés sur les figures annexées, aptes à détecter la présence d'un utilisateur dans l'espace environnant le bras de chargement 3 et/ou des moyens d'avertissement, sonores ou lumineux permettant d'avertir l'utilisateur de sa présence dans cette zone pour l'inciter à la quitter.

On peut voir également sur la figure 2 que la cuve la peut contenir une ou plusieurs vis mélangeuse 9a, 9b, de préférence deux vis mélangeuses, similaires ou différentes l'une de l'autre, ou autres outils de mélange ou de travail du produit dans la cuve 1a, pouvant s'étendre verticalement dans cette dernière.

Bien entendu, l'invention n'est pas limitée aux modes ou formes de réalisation décrits et représentés aux dessins annexés. Des modifications restent possibles dans la limite des revendications.

## Revendications

1. Véhicule agricole pour collecter et, éventuellement traiter, des produits fibreux et/ou granulaires ou tout autre fourrage en vue de leur distribution, ledit véhicule agricole étant un véhicule agricole autonome s'étendant le long d'un axe longitudinal (X) et comprenant, d'une part, un corps de véhicule (1) comportant une cuve (1a) de réception et de mélange et un châssis (1b) supportant la cuve (1a), d'autre part, une unité de prélèvement et de transport (2, 3, 4) comprenant une tête de prélèvement (2) munie d'un organe de prélèvement (2a) du produit, de préférence un organe de prélèvement rotatif consistant en une fraise rotative, et un bras de chargement (3) équipé d'un dispositif de transfert (4) apte à transporter ledit produit prélevé jusque dans la cuve (1a) et, d'autre part, des moyens d'entraînement et de guidage en pivotement (5a, 5b), le bras de chargement (3) étant monté sur le corps de véhicule (1) en étant, grâce auxdits moyens d'entraînement et de guidage en pivotement (5a, 5b), mobile en pivotement dans un plan vertical autour d'un axe de pivotement (5a) horizontal et perpendiculaire au plan médian principal (P) de sorte à permettre un déplacement vertical de l'organe de prélèvement (2a) lors du pivotement du bras de chargement (3),
véhicule agricole **caractérisé :**
- **en ce que** la largeur hors tout (L1) de l'organe de prélèvement (2a) est inférieure ou égale à la moitié de largeur hors tout (L2) du corps de véhicule (1), ladite largeur hors tout (L1, L2) étant définie comme l'étendue maximale du corps de véhicule (1), respectivement de l'organe de prélèvement (2a), mesurée en unité de longueur, dans une direction perpendiculaire au plan médian, dit plan médian principal (P), du véhicule agricole contenant son axe longitudinal (X),
- **en ce qu'**il comprend des moyens d'entraînement et de guidage en translation (6a, 6b) et en ce que le bras de chargement (3) est monté sur le corps de véhicule (1) en étant, grâce auxdits moyens d'entraînement et de guidage en translation (6a, 6b), mobile en translation dans une direction transversale (T), perpendiculaire au plan médian principal (P), de sorte à permettre un déplacement transversal de la tête de prélèvement (2) et son organe de prélèvement (2a), c'est-à-dire dans ladite direction transversale (T), entre une première position de translation d'extrémité définie par un premier plan médian (P1), parallèle au plan médian principal (P), de la tête de prélèvement (2) ou du bras de chargement (3) et une deuxième position de translation d'extrémité définie par un deuxième plan médian (P2), parallèle au plan médian principal (P), de la tête de prélèvement (2) ou du bras de chargement (3).

2. Véhicule agricole, selon la revendication 1, **caractérisé en ce que** la largeur hors tout (L1) de l'organe de prélèvement (2a) est inférieure ou égale à la moitié de la distance (D) entre le premier plan médian (P1) et le deuxième plan médian (P2).

3. Véhicule agricole, selon la revendication 1 ou 2, **caractérisé en ce que** la largeur hors tout (L1) de l'organe de prélèvement (2a) est inférieure à la moitié de la distance (D) entre le premier plan médian (P1) et le deuxième plan médian (P2) et est supérieure ou égale au tiers de la distance (D) entre le premier plan médian (P1) et le deuxième plan médian (P2).

4. Véhicule agricole, selon l'une quelconque des revendications 1 à 3, **caractérisé en ce que** le bras de chargement (3), d'une part, comprend un support mobile (3a) monté en translation sur le corps de véhicule (1) pour permettre sa translation et, d'autre part, est monté en pivotement sur le support mobile (3a) pour permettre son pivotement en n'importe quel point de sa translation.

5. Véhicule agricole, selon l'une quelconque des revendications 1 à 4, caractérisé que le dispositif de transfert (4) comprend une plateforme de jonction (4a) permettant de canaliser la sortie du produit transporté par le dispositif de transfert (4) jusque dans la cuve (1a) qui comprend à cet effet une ouverture de réception (10a) dudit produit et en ce que ladite cuve (1a) comprend deux zones de jonction (8a, 8b) réalisant une jonction ou une quasi jonction entre son ouverture de réception (10a) et ladite plateforme de jonction (4a) pour permettre la réception du produit dans la cuve (1a) quel que soit la position de translation d'extrémité (P1, P2) du bras de chargement (3), à savoir une première zone de jonction (8a) assurant une première jonction ou quasi jonction entre l'ouverture de réception (10a) et la plateforme de jonction (4a) lorsque celle-ci se trouve en un point de translation correspondant à la première position de translation d'extrémité du bras de chargement (3) et une deuxième zone de jonction (8b) assurant une deuxième jonction ou quasi jonction entre l'ouverture de réception (10a) et la plateforme de jonction (4a) lorsque celle-ci se trouve en un point de translation correspondant à la deuxième position de translation d'extrémité (P2) du bras de chargement (3).

6. Véhicule agricole, selon l'une quelconque des revendications 1 à 5, **caractérisé en ce que** le dispositif de transfert (4) comprend un organe de transport, tel qu'un convoyeur à bande, et **en ce que** la largeur hors tout dudit organe de transport est inférieure à celle de l'organe de prélèvement (2a).

7. Véhicule agricole, selon l'une quelconque des revendications 1 à 6, **caractérisé en ce qu'**il comprend des moyens de détection aptes à détecter la présence d'un utilisateur au moins dans une zone environnant le bras de chargement (3) et/ou des moyens d'avertissement, sonores ou lumineux.

## Patentansprüche

1. Landwirtschaftliches Fahrzeug zum Sammeln und eventuellen Aufbereiten von faserigen und/oder körnigen Produkten oder einer anderen Art von Futter für ihre Verteilung, wobei das landwirtschaftliche Fahrzeug ein autonomes landwirtschaftliches Fahrzeug ist, das sich entlang einer Längsachse (X) erstreckt und einerseits einen Fahrzeugkörper (1) umfasst, der einen Bottich (1a) zur Aufnahme und zum Mischen und ein den Bottich (1a) tragendes Fahrgestell (1b) aufweist, andererseits eine Entnahme- und Transporteinheit (2, 3, 4), die einen Entnahmekopf (2) umfasst, der mit einem Organ zur Entnahme (2a) des Produkts versehen ist, vorzugsweise einem drehbaren Entnahmeorgan, das aus einer drehbaren Fräse besteht, und einen Ladearm (3), der mit einer Transfervorrichtung (4) ausgestattet ist, die geeignet ist, das entnommene Produkt bis in den Bottich (1a) zu transportieren, und andererseits Schwenkantriebs- und -führungsmittel (5a, 5b), wobei der Ladearm (3) am Fahrzeugkörper (1) so angebracht ist, dass er dank der Schwenkantriebs- und -führungsmittel (5a, 5b) in einer vertikalen Ebene um eine horizontale und zur Hauptmittelebene (P) senkrechte Schwenkachse (5a) schwenkbeweglich ist, um eine vertikale Verlagerung des Entnahmeorgans (2a) bei der Schwenkung des Ladearmes (3) zu ermöglichen,
wobei das landwirtschaftliche Fahrzeug **gekennzeichnet ist:**
- **dadurch**, dass die Gesamtbreite (L1) des Entnahmeorgans (2a) kleiner oder gleich der Hälfte der Gesamtbreite (L2) des Fahrzeugkörpers (1) ist, wobei die Gesamtbreite (L1, L2) als die maximale Erstreckung des Fahrzeugkörpers (1) bzw. des Entnahmeorgans (2a) definiert ist, gemessen in Längeneinheiten in einer Richtung, die zu der Mittelebene des landwirtschaftlichen Fahrzeugs, die seine Längsachse (X) enthält, Hauptmittelebene (P) genannt, senkrecht ist,
- **dadurch**, dass es Translationsantriebs- und
- führungsmittel (6a, 6b) umfasst, und dadurch, dass der Ladearm (3) am Fahrzeugkörper (1) so angebracht ist, dass er dank der Translationsantriebs- und -führungsmittel (6a, 6b) in einer zur Hauptmittelebene (P) senkrechten Querrichtung (T) translatorisch beweglich ist, um eine Querverlagerung des Entnahmekopfes (2) und seines Entnahmeorgans (2a), d. h. in der Querrichtung (T), zwischen einer ersten Endposition der Translation des Entnahmekopfes (2) oder des Ladearmes (3), die durch eine zur Hauptmittelebene (P) parallele erste Mittelebene (P1) definiert ist, und einer zweiten Endposition der Translation des Entnahmekopfes (2) oder des Ladearmes (3), die durch eine zur Hauptmittelebene (P) parallele zweite Mittelebene (P2) definiert ist, zu ermöglichen.

2. Landwirtschaftliches Fahrzeug nach Anspruch 1, **dadurch gekennzeichnet, dass** die Gesamtbreite (L1) des Entnahmeorgans (2a) kleiner oder gleich der Hälfte des Abstands (D) zwischen der ersten Mittelebene (P1) und der zweiten Mittelebene (P2) ist.

3. Landwirtschaftliches Fahrzeug nach Anspruch 1 oder 2, **dadurch gekennzeichnet, dass** die Gesamtbreite (L1) des Entnahmeorgans (2a) kleiner als die Hälfte des Abstands (D) zwischen der ersten Mittelebene (P1) und der zweiten Mittelebene (P2) ist und größer oder gleich einem Drittel des Abstands (D) zwischen der ersten Mittelebene (P1) und der zweiten Mittelebene (P2) ist.

4. Landwirtschaftliches Fahrzeug nach einem der Ansprüche 1 bis 3, **dadurch gekennzeichnet, dass** der Ladearm (3) einerseits einen beweglichen Träger (3a) umfasst, der translatorisch verschiebbar am Fahrzeugkörper (1) angebracht ist, um seine Translation zu ermöglichen, und andererseits auf dem beweglichen Träger (3a) schwenkbar gelagert ist, um seine Schwenkung an jedem beliebigen Punkt seiner Translation zu ermöglichen.

5. Landwirtschaftliches Fahrzeug nach einem der Ansprüche 1 bis 4, **dadurch gekennzeichnet, dass** die Transfervorrichtung (4) eine Verbindungsplattform (4a) umfasst, die es ermöglicht, den Austritt des von der Transfervorrichtung (4) transportierten Produkts bis in den Bottich (1a) zu kanalisieren, welcher zu diesem Zweck eine Aufnahmeöffnung (10a) für das Produkt umfasst, und dadurch, dass der Bottich (1a) zwei Verbindungsbereiche (8a, 8b) umfasst, die eine Verbindung oder eine Quasiverbindung zwischen seiner Aufnahmeöffnung (10a) und der Verbindungsplattform (4a) herstellen, um die Aufnahme des Produkts in den Bottich (1a) unabhängig von der Endposition (P1, P2) der Translation des Ladearmes (3) zu ermöglichen, nämlich einen ersten Verbindungsbereich (8a), der eine erste Verbindung oder Quasiverbindung zwischen der Aufnahmeöffnung (10a) und der Verbindungsplattform (4a) sicherstellt, wenn diese sich in einem Translationspunkt befindet, welcher der ersten Endposition der Translation des Ladearmes (3) entspricht, und einen zweiten Verbindungsbereich (8b), der eine zweite Verbindung oder Quasiverbindung zwischen der Aufnahmeöffnung (10a) und der Verbindungsplattform (4a) sicherstellt, wenn diese sich in einem Translationspunkt befindet, welcher der zweiten Endposition (P2) der Translation des Ladearmes (3) entspricht.

6. Landwirtschaftliches Fahrzeug nach einem der Ansprüche 1 bis 5, **dadurch gekennzeichnet, dass** die Transfervorrichtung (4) ein Transportorgan wie etwa ein Förderband umfasst, und dadurch, dass die Gesamtbreite des Transportorgans kleiner als diejenige des Entnahmeorgans (2a) ist.

7. Landwirtschaftliches Fahrzeug nach einem der Ansprüche 1 bis 6, **dadurch gekennzeichnet, dass** es Erkennungsmittel, die geeignet sind, die Anwesenheit eines Benutzers wenigstens in einem den Ladearm (3) umgebenden Bereich zu erkennen, und/oder akustische oder optische Warnmittel umfasst.

## Claims

1. Agricultural vehicle for collecting and possibly processing fibrous and/or granular products or any other fodder for the purpose of distributing these, said agricultural vehicle being an autonomous agricultural vehicle extending along a longitudinal axis (X) and comprising, on one hand, a vehicle body (1) comprising a receiving and mixing tank (1a) and a chassis (1b) supporting the tank (1a), on the other hand, a picking-up and transporting unit (2, 3, 4) comprising a picking-up head (2) provided with a picking-up member (2a) for picking up the product, preferably a rotary picking-up member consisting of a rotary cutter, and a loading arm (3) equipped with a transfer device (4) that is able to transport said picked product to the tank (1a) and, on the other hand, means (5a, 5b) for bringing about and guiding a pivoting motion, the loading arm (3) being mounted on the vehicle body (1) and being able, by virtue of said means (5a, 5b) for bringing about and guiding a pivoting motion, to pivot in a vertical plane about a pivot axis (5a) that is horizontal and perpendicular to the main median plane (P) so as to allow the picking-up member (2a) to move vertically when the loading arm (3) pivots,
the agricultural vehicle being **characterized**
- **in that** the overall width (L1) of the picking-up member (2a) is less than or equal to half the overall width (L2) of the vehicle body (1), said overall width (L1, L2) being defined as the maximum extent of the vehicle body (1), and respectively of the picking-up member (2a), measured in units of length, in a direction perpendicular to the median plane, termed main median plane (P), of the agricultural vehicle containing its longitudinal axis (X),
- **in that** it comprises means (6a, 6b) for bringing about and guiding a movement in translation, and in that the loading arm (3) is mounted on the vehicle body (1), being able, by virtue of the means (6a, 6b) for bringing about and guiding a movement in translation, to move in translation in a transverse direction (T) that is perpendicular to the main median plane (P) so as to permit a transverse movement of the picking-up head (2) and its picking-up member (2a), that is to say in said transverse direction (T), between a first translational end position defined by a first median plane (P1), parallel to the main median plane (P), of the picking-up head (2) or of the loading arm (3) and a second translational end position defined by a second median plane (P2), parallel to the main median plane (P), of the picking-up head (2) or of the loading arm (3).

2. Agricultural vehicle according to Claim 1, **characterized in that** the overall width (L1) of the picking-up member (2a) is less than or equal to half the distance (D) between the first median plane (P1) and the second median plane (P2).

3. Agricultural vehicle according to Claim 1 or 2, **characterized in that** the overall width (L1) of the picking-up member (2a) is less than half the distance (D) between the first median plane (P1) and the second median plane (P2) and is greater than or equal to one-third of the distance (D) between the first median plane (P1) and the second median plane (P2).

4. Agricultural vehicle according to any one of Claims 1 to 3, **characterized in that** the loading arm (3), on one hand, comprises a mobile support (3a) that is mounted in translation on the vehicle body (1) so as to allow it to move in translation and, on the other hand, is mounted pivotably on the mobile support (3a) so as to allow it to pivot at any point in its translational movement.

5. Agricultural vehicle according to any one of claims 1 to 4, **characterized in that** the transfer device (4) comprises a junction platform (4a) by which it is possible to channel the output of the product transported by the transfer device (4) into the tank (1a) which, to that end, comprises a receiving opening (10a) for receiving said product, and **in that** said tank (1a) comprises two junction regions (8a, 8b) that establish a junction or a quasi-junction between its receiving opening (10a) and said junction platform (4a) so as to make it possible to receive the product in the tank (1a) whatever the translational end position (P1, P2) of the loading arm (3), specifically a first junction region (8a) that establishes a first junction or quasi-junction between the receiving opening (10a) and the junction platform (4a) when the latter is at a translational point corresponding to the first translational end position of the loading arm (3) and a second junction region (8b) that establishes a second junction or quasi-junction between the receiving opening (10a) and the junction platform (4a) when the latter is at a translational point corresponding to the second translational end position (P2) of the loading arm (3) .

6. Agricultural vehicle according to any one of Claims 1 to 5, **characterized in that** the transfer device (4) comprises a transport member such as a belt conveyor, and **in that** the overall width of said transport member is smaller than that of the picking-up member (2a).

7. Agricultural vehicle according to any one of Claims 1 to 6, **characterized in that** it comprises the connection means that are able to detect the presence of a user at least in a region close to the loading arm (3), and/or sound- or light-based warning means.
